# EUROPEAN PATENT SPECIFICATION

(11) **EP 4 576 619 B1**
(45) Date of publication and mention of the grant of the patent: **02.09.2026**
(21) Application number: 24210425.5
(22) Date of filing: 01.11.2024
(51) Int. Cl.: H04J 3/06, H04L 12/40

(54) **TIME SYNCHRONIZATION WITHIN AN AIRCRAFT SYSTEM**
ZEITSYNCHRONISATION IN EINEM FLUGZEUGSYSTEM
SYNCHRONISATION TEMPORELLE DANS UN SYSTÈME D'AÉRONEF

(30) Priority: 21.12.2023 US 202318392945
(43) Date of publication of application: 25.06.2025
(73) Proprietor: GE Aviation Systems Limited, Bishops Cleeve Cheltenham Gloucestershire GL52 8SF (GB)
(72) Inventor: VOGELI, Andrew, Byron Center (US); RANG, John, Hastings (US); GORBY, Ryan, Howard City (US)
(74) Representative: Openshaw & Co.

(56) References cited:
- US-A1- 2022 248 359
- US-B1- 6 690 655
- US-B2- 11 284 365
- US-B2- 8 116 405
- "AEROSPACE TSN USE CASES, TRAFFIC TYPES, AND REQUIRMENTS", vol. 802.1, no. v06, 9 March 2021 (2021-03-09), pages 1 - 32, XP068178158, Retrieved from the Internet <URL:http://www.ieee802.org/1/files/public/docs2021/dp-Jabbar-et-al-Aerospace-Use-Cases-0321-v06.pdf> [retrieved on 20210309]

## Description

### TECHNICAL FIELD

The subject matter described herein relates, in general, to systems and methods for providing time synchronization between devices in a network within an aircraft system.

### BACKGROUND

Various types of control systems communicate with and transfer data between different sensors, devices, user interfaces, etc. to enable control operations of powered systems. The operations of these powered systems rely on the accurate and timely delivery of data between the devices. Failure to deliver data in a timely manner may result in failure of the powered system, and negatively affect the function, performance, and stability of the powered system and other dependent systems.

US11284365 B2 (ROCKWELL COLLINS INC [US]) 22 March 2022 (2022-03-22) discloses time synchronization over redundant switch-based avionics networks. A source clock on an aircraft receives timing from satellite signal and based on this timing signal the source time is updated. Based on the updated source time, the timing message are transmitted over the redundant network. The publication "AEROSPACE TSN USE CASES, TRAFFIC TYPES, AND REQUIRMENTS", IEEE DRAFT; DP-JABBAR-ET-AL-AEROSPACE-USE-CASES-0321-V06, IEEE-SA, PISCATAWAY, NJ USA, vol. 802.1, no. v06 9 March 2021 (2021-03-09), pages 1-32 discloses aerospace TSN. Clocks are synchronized using 1Hz PPS pulses and PTP.

### BRIEF DESCRIPTION OF THE DRAWINGS

The accompanying drawings, which are incorporated in and constitute a part of the specification, illustrate various systems, methods, and other embodiments of the disclosure. It will be appreciated that the illustrated element boundaries (e.g., boxes, groups of boxes, or other shapes) in the figures represent one embodiment of the boundaries. In some embodiments, one element may be designed as multiple elements or multiple elements may be designed as one element. In some embodiments, an element shown as an internal component of another element may be implemented as an external component and vice versa. Furthermore, elements may not be drawn to scale.
FIG. 1 is an example of a time synchronization system within a network of devices.
FIG. 2 is another example of a time synchronization system within a network of devices.
FIG. 3 illustrates one embodiment of a time synchronization system.
FIG.4 is a flowchart illustrating one embodiment of a method associated with providing time synchronization between devices in a network.
FIG. 5 is a flowchart illustrating another embodiment of a method associated with providing time synchronization between devices in a network.

### DETAILED DESCRIPTION

Systems, methods, and other embodiments associated with systems and methods for providing time synchronization between devices in a network within an aircraft system are disclosed. Some systems may include a network connecting multiple devices, e.g., subsystems, devices, and/or components. As an example, some systems may use a time-sensitive network (TSN) to communicate data using standard methods for time synchronization and traffic management, allowing deterministic communication over standard Ethernet networks between the devices. As such, some systems including industrial and aerospace applications may use a TSN to communicate data to meet the timing requirements.

In order for the operation of the system to be time-coordinated and to ensure that the timing requirements of the system are being met, the devices in the systems may need to operate in unison or at least on a single clock such that the devices are in sync. A suitable single clock is a 1PPS signal that may originate in a global positioning system (GPS) receiver, an Assured Positioning, Navigation and Timing (A-PNT) device, a time sensitive network (TSN) Native Navigation Line Replaceable Unit (LRU), a radio beacon, a frequency standard, a precision oscillator, and/or an atomic clock.

Current methods of transmitting the single clock to multiple devices include connecting cables such as coaxial cables or differential paired cables between the GPS and the multiple devices. However, the length of the cables between the GPS and the devices may cause delays such that the devices may not achieve time synchronization. Current methods may attempt to achieve or maintain time synchronization by including additional hardware such as repeaters and/or distribution circuits. The weight of the cables and the additional hardware may be significant such that the weight of the cables and the additional hardware on, as an example, an aircraft may weigh down the aircraft and have a negative impact. Another disadvantage is the cost of cables, the physical limitations of cables, as well as the installation, the maintenance, the inspection, and the removal of cables. Another disadvantage is in a case where there is a single cable between the GPS and a device, there is no redundancy. As such, if the cable is no longer functional, the device is unable to synchronize with the GPS and the other devices. Alternatively, multiple cables may be connected (which may be costly) between the GPS and each device to include redundancy.

Accordingly, systems, methods, and other embodiments associated with providing time synchronization between devices in a network without additional wired infrastructure, e.g., cables, are disclosed. In one embodiment, the disclosed approach includes a network. As an example, the network may be an aircraft data network. The network includes one or more clock sources, a distribution system, and multiple devices. The distribution system may be a wired infrastructure and may include cables, switches, and remote interface units (RIUs). The cables are connected to the RIUs and/or the switches. The devices are connected to the distribution system through the RIUs and/or the switches. One or more of the devices may be connected to the one or more clock sources. As an example, the clock sources may be a Legacy GPS and/or an A-PNT device. The clock source may provide a clock in the form of a GPS 1PPS signal. The clock source may also provide a 10MHz frequency reference.

In one embodiment, the method includes selecting a Grand Master Clock from the clocks on the network and establishing time synchronization between the RIUs based on the Grand Master Clock. The time synchronization may be based on Precision Time Protocol (PTP) or generic Precision Time Protocol (gPTP).

The method includes receiving, by a first RIU, the 1PPS signal from a clock source and recording the time, known as the 1PPS received time, that the 1PPS signal is received relative to the Grand Master Clock,. Alternatively and/or additionally, the method may include receiving, by the first RIU, the 1PPS signal and the 10MHz frequency reference from the clock source and recording the time that the 1PPS signal is received relative to the Grand Master Clock. The method includes calculating a 1PPS period, which is the duration of the 1PPS clock cycle and may be known as GPS second. The method then includes storing the 1PPS received time and the 1PPS period in a TSN message and transmitting the TSN message from the first RIU to the other RIUs in the network.

The method further includes receiving, by the other RIUs, the TSN message and extracting the 1PPS received time and the 1PPS period with respect to the Grand Master Clock from the TSN message. The method includes generating a 1PPS clock based on the 1PPS received time and the 1PPS period. As an example, the method may include generating the 1PPS clock by each of the other RIUs firing a clock signal at the 1PPS received time plus the 1PPS period. The outgoing clock signal may be utilized by the devices connected to the network.

In one embodiment, the method includes determining that the first RIU is no longer receiving a functional 1PPS signal. The method includes, in response to determining that the first RIU is no longer receiving a functional 1PPS signal, discovering and selecting another clock source from the available clock sources in the network. The method may then follow the previously disclosed method with a clock source replacing the previous clock source.

The embodiments disclosed herein present various advantages over conventional technologies that provide time synchronization. First, the embodiments operate without a physical connection between the clock source such as the GPS and the devices on the network. As such, the embodiments eliminate the need for substantial cables and wiring. Also, devices may be located at any suitable location within, as an example, an aircraft without requiring additional cables and/or wiring. Second, the embodiments utilize existing network time protocols such as TSN gPTP (IEEE 802. 1AS) time to broadcast the 1PPS signal and the 1PPS period. The embodiments may also utilize other Ethernet time protocols such as IEEE 1588 or White Rabbit. Third, the embodiments include RIUs generating a 1PPS clock that is within the accuracy and tolerance level for avionics use. Fourth, the embodiments can incorporate redundancy to make the system and the network more resilient without additional hardware.

In one embodiment, a method for providing time synchronization between devices in a network is disclosed. The method includes synchronizing a plurality of remote interface units (RIU) to a single network time. The plurality of RIUs are connected in a network. The method includes receiving, by a first of the plurality of RIUs, a one pulse-per-second (1PPS) signal. The method further includes determining a 1PPS receive time and a 1PPS period based on the 1PPS signal and with respect to the single network time. The 1PPS receive time is when the 1PPS signal is received by the first of the plurality of RIUs. The method includes transmitting, by the first of the plurality of RIUs, a message to a second of the plurality of RIUs. The message includes the 1PPS receive time and 1PPS period, and the second of the plurality of RIUs is one of the plurality of RIUs other than the first of the plurality of RIUs.

In another embodiment, a system for providing time synchronization between devices in a network is disclosed. The system includes a processor and a memory in communication with the processor. The memory stores machine-readable instructions that, when executed by the processor, cause the processor to synchronize a plurality of remote interface units (RIU) to a single network time, receive, by a first of the plurality of RIUs, a one pulse-per-second (1PPS) signal, determine a 1PPS receive time and a 1PPS period based on the 1PPS signal and with respect to the single network time, and transmit, by the first of the plurality of RIUs, a message to a second of the plurality of RIUs. The plurality of RIUs are connected in a network. The 1PPS receive time is when the 1PPS signal is received by the first of the plurality of RIUs. The message includes the 1PPS receive time and 1PPS period and the second of the plurality of RIUs is one of the RIUs other than the first of the plurality of RIUs.

In another embodiment, a non-transitory computer-readable medium for providing time synchronization between devices in a network is disclosed. The non-transitory computer-readable medium includes instructions that when executed by a processor cause the processor to synchronize a plurality of remote interface units (RIU) to a single network time, receive, by a first of the plurality of RIUs, a one pulse-per-second (1PPS) signal, determine a 1PPS receive time and a 1PPS period based on the 1PPS signal and with respect to the single network time, and transmit, by the first of the plurality of RIUs, a message to a second of the plurality of RIUs. The plurality of RIUs are connected in a network. The 1PPS receive time is when the 1PPS signal is received by the first of the plurality of RIUs. The message includes the 1PPS receive time and 1PPS period. Further, the second of the plurality of RIUs is one of the RIUs other than the first of the plurality of RIUs.

Detailed embodiments are disclosed herein; however, it is to be understood that the disclosed embodiments are intended only as examples. Therefore, specific structural and functional details disclosed herein are not to be interpreted as limiting, but merely as a basis for the claims and as a representative basis for teaching one skilled in the art to variously employ the aspects herein in virtually any appropriately detailed structure. Further, the terms and phrases used herein are not intended to be limiting but rather to provide an understandable description of possible implementations. Various embodiments are shown in the figures, but the embodiments are not limited to the illustrated structure or application.

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details.

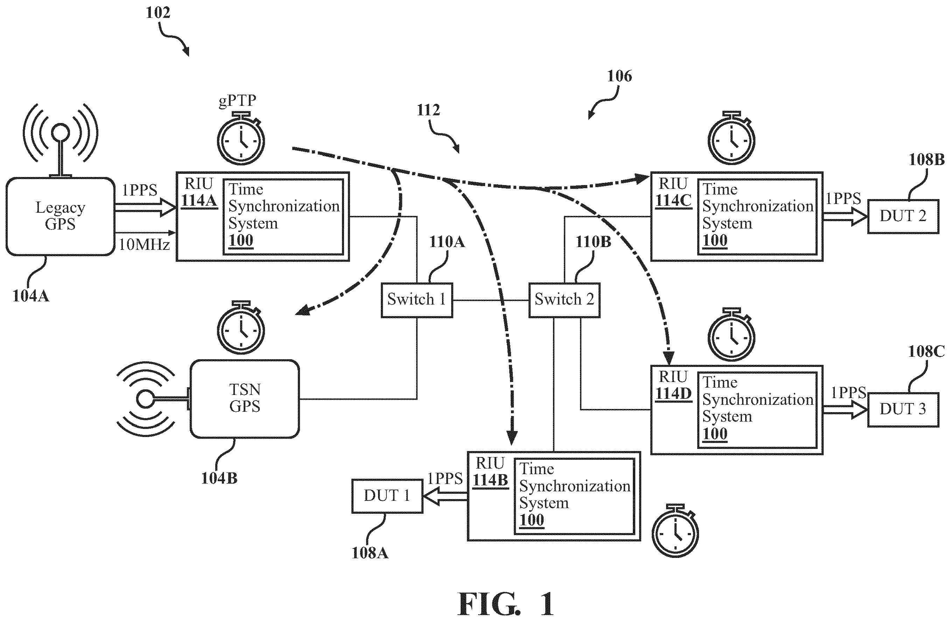

Referring to FIG. 1, an example of a time synchronization system 100 within a network 102 is shown. The network 102 may include one or more clock sources 104A, 104B (collectively known as 104), a distribution system 106, and one or more devices 108A, 108B, 108C (collectively known as 108) connected to the distribution system 106. The network 102 may be a Time-Sensitive Network based on a set of Ethernet sub-standards defined in the IEEE 802.1.

The clock sources 104 are capable of outputting one or more electrical clock signals. As an example, the clock source(s) 104 may output an electrical clock signal such as one pulse-per-second (1PPS) signal and/or a 10MHz frequency reference signal. The clock source 104 may be a global positioning system (GPS) receiver, an Assured Positioning, Navigation and Timing (A-PNT) device, a time sensitive network (TSN) Native Navigation Line Replaceable Unit (LRU), a radio beacon, a frequency standard, a precision oscillator, and/or an atomic clock. As an example, a system such as a legacy avionics system may provide the 1PPS signal and/or the 10MHz frequency reference signal. As another example and as shown, the network 102 may include a first clock source 104A that is a Legacy GPS and a second clock source 104B that is a TSN GPS.

The distribution system 106 may include a databus 112 and one or more Remote Interface Units (RIUs) 114A, 114B, 114C, 114D (collectively known as 114). The databus 112 may include one or more switches 110A, 110B (collectively known as 110) for controlling the data rate and the data direction through the databus 112. The databus 112 is connected to the RIUs 114 and is capable of transferring data between the RIUs 114. In other words, the databus 112 is capable of transferring data to and from the RIUs 114. The RIU 114 is an input and/or output interface that connects devices 108 to the databus 112. The RIU 114 includes at least one clock for operating and/or controlling the RIU 114 as well as for data transmission via the RIU 114. Additionally, the RIU 114 may be connected to the clock source 104. As shown, the first clock source 104A is connected to an RIU 114A and the second clock source 104B is connected to a switch 110A. The RIU 114 is capable of receiving data from the databus 112 and transmitting the data to the devices 108. The RIU 114 is capable of receiving data from the devices 108 and transmitting the data to the databus 112. As such, the RIU 114 is capable of receiving and transmitting data between the devices 108 connected to the databus 112 via the databus 112. As an example, the network 102 may be based on a Distributed Integrated Modular Avionics (DIMA) platform. As such, the network 102 may include a databus 112 that may be an avionics databus connecting devices 108 that may include various avionics devices. Examples of the devices 108 include navigation and/or communication equipment. As shown and as an example, the devices 108 may be Devices Under Test (DUT).

The network 102 includes one or more time synchronization systems 100. The time synchronization system 100 includes various elements that will be described in detail below. In some arrangements, the time synchronization system 100 may be a standalone system in communication with portions of the network 102. As an example, the time synchronization system 100 may be a standalone system connected to and in communication with one or more RIUs 114. As another example and as shown in FIG. 1, the time synchronization systems 100 may located within the RIUs 114. In some arrangements, the elements of the time synchronization system 100 may be distributed between and/or embedded in portions of the network 102. As an example, elements of the time synchronization system 100 may be distributed between and located in one or more RIUs 114.

As an example, the network system may be a part of an aviation system that includes a GPS/ Inertial Navigation Systems (INS) computer fulfilling the legacy GPS role. The network system may further include multiple devices that require 1PPS from the GPS/INS computer such as a Stores Management Computer (SMC), a VHF omnidirectional range (VOR) radio, and a Multifunctional Information Distribution System (MIDS) computer. The SMC may use the 1PPS signal for weapon/sensor level alignment and may have a tolerance on the order of milliseconds. The VOR radio may use the 1PPS signal for low rate signal synchronization associated with navigation radio signals and may have a tolerance on the order of microseconds. The MIDS computer may use the 1PPS signal for a high rate signal synchronization associated with a datalink radio and may have a tolerance on the order of nanoseconds.

As previously mentioned, current methods may include direct and physical cabling between the multiple devices for the data and the 1PPS signal. The time synchronization system disclosed in this application allows for a central networked system that can be used to meet the various tolerance levels

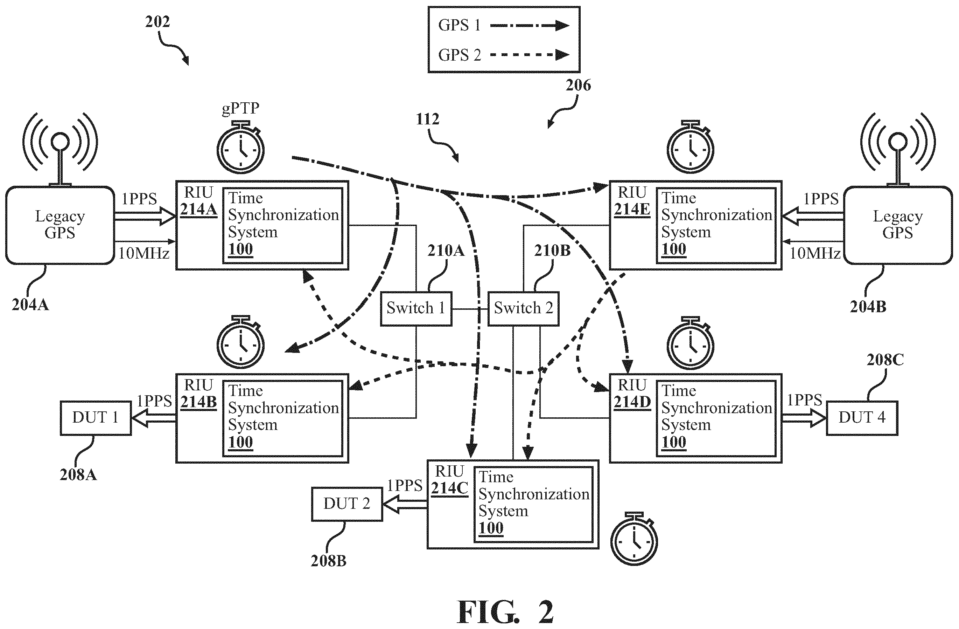

Referring to FIG. 2, another example of a time synchronization system 100 within a network 202 is shown. In this example and as shown, the network 202 includes two clock sources 204A, 204B (collectively known as 204), a distribution system 206, and three devices 208A, 208B, 208C (collectively known as 208) connected to the distribution system 206.

The clock sources 204 are similar to the clock sources 104 disclosed in FIG. 1 above. As an example and as shown in FIG. 2, the clock sources 204 are GPS receivers. The distribution system 206, similar to the distribution system 106 in FIG. 1, includes a databus 212 and five RIUs 214A, 214B, 214C, 214D, 214E (collectively known as 214). The first clock source 204A is connected to a first RIU 214A and the second clock source 204B is connected to a third RIU 214E. The databus 212 and the RIUs 214 are similar to the databus 112 and RIUs 114 disclosed in FIG.1 above. The databus 212 may include one or more switches 210A, 210B (collectively known as 210) similar to the switches 110 disclosed in FIG. 1 above. The network 202 includes three devices 208 that are connected to three RIUs 214 including a second RIU 214B, a fourth RIU 214C, and a fifth RIU 214D.

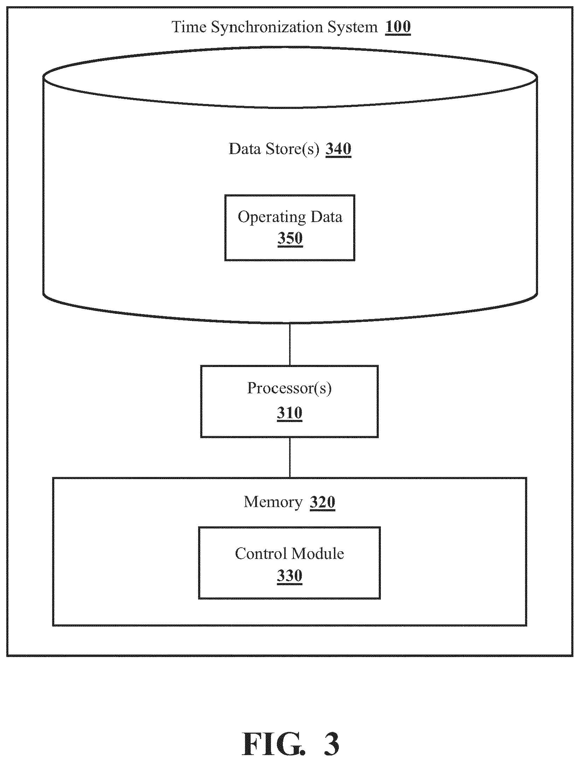

With reference to FIG. 3, a more detailed block diagram of the time synchronization system 100 is shown. The time synchronization system 100 may include a processor(s) 310. Accordingly, the processor(s) 310 may be a part of the time synchronization system 100, or the processor(s) 310 may be external to the time synchronization system 100 such that the time synchronization system 100 may access the processor(s) 310 through a data bus or another communication pathway. In one or more embodiments, the processor(s) 310 is an application-specific integrated circuit that may be configured to implement functions associated with a control module 330. More generally, in one or more aspects, the processor(s) 310 is an electronic processor, such as a microprocessor that can perform various functions as described herein when loading the control module 330 and executing encoded functions associated therewith.

The time synchronization system 100 may include a memory 320 that stores the control module 330. The memory 320 may be a random-access memory (RAM), read-only memory (ROM), a hard disk drive, a flash memory, or other suitable memory for storing the control module 330. The control module 330 is, for example, a set of computer-readable instructions that, when executed by the processor(s) 310, cause the processor(s) 310 to perform the various functions disclosed herein. While, in one or more embodiments, the control module 330 is a set of instructions embodied in the memory 320, in further aspects, the control module 330 may include hardware, such as processing components (e.g., controllers), circuits, etc., for independently performing one or more of the noted functions.

The time synchronization system 100 may include a data store(s) 340 for storing one or more types of data. Accordingly, the data store(s) 340 may be a part of the time synchronization system 100, or the time synchronization system 100 may access the data store(s) 340 through a data bus or another communication pathway. The data store(s) 340 is, in one embodiment, an electronically based data structure for storing information. In at least one approach, the data store 340 is a database that is stored in the memory 320 or another suitable medium, and that is configured with routines that can be executed by the processor(s) 310 for analyzing stored data, providing stored data, organizing stored data, and so on. In either case, in one embodiment, the data store 340 stores data used by the control module 330 in executing various functions. In one embodiment, the data store 340 may be able to store operating data 350 and/or other information that is used by the control module 330.

The data store(s) 340 may include volatile and/or non-volatile memory. Examples of suitable data stores 340 include RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The data store(s) 340 may be a component of the processor(s) 310, or the data store(s) 340 may be operatively connected to the processor(s) 310 for use by the processor(s) 310. The term "operatively connected" or "in communication with" as used throughout this description, can include direct or indirect connections, including connections without direct physical contact.

In one embodiment, the control module 330 may include instructions that, when executed by the processor(s) 310, cause the processor(s) 310 to synchronize a plurality of remote interface units (RIU) to a single network time. The RIUs are connected in a network 102, 202. The single network time is based on at least one of precision time protocol (PTP) and/or generic precision time protocol (gPTP). The PTP is a protocol used to synchronize clocks through a network and may be based on IEEE 1588 or IEEE 802.1AS. The gPTP is also a protocol used to synchronize clocks through a network. The gPTP may be based on IEEE 802.1AS.

As an example, the control module 330 may signal to the RIUs 114, 214 to establish synchronization with a single clock. The single clock may be a clock located in one of the RIUs 114, 214. The control module may select the clock in one RIU 114, 214 to be a Grand Master Clock that the clocks in the other RIUs 114, 214 synchronize to. The control module 330 may select the clock to be the Grand Master Clock using one or more of a variety of methods based on, as an example, the IEEE 802.1AS Protocol, the IEEE 1588 Protocol, a selection by an integrator, and/or the Best Master Clock algorithm (BMCA). Alternatively, the control module 330 may signal to the RIUs 114, 214 to establish synchronization with a single clock, and in response, the RIUs 114, 214 may coordinate between the RIUs 114, 214, using one or more of the methods previously disclosed, to select a Grand Master Clock from the clocks in the RIUs 114, 214 and synchronize the remaining clocks to the Grand Master Clock. The Grand Master Clock outputs the single network time.

In one embodiment, the control module 330 may include instructions that, when executed by the processor(s) 310, cause the processor(s) 310 to receive, by a first of the plurality of RIUs 114, 214, a one pulse-per-second (1PPS) signal. As previously disclosed in FIG. 1 and as an example, the RIU 114A is connected to the clock source 104A. The clock source 104 is a Legacy GPS outputting a 1PPS signal. The RIU 114A receives the 1PPS signal being output by the clock source 104A.

In one embodiment, the control module 330 may include instructions that, when executed by the processor(s) 310, cause the processor(s) 310 to receive, by the first of the plurality of RIUs 114, 214, a 10MHz frequency reference. In addition to outputting the 1PPS signal, the clock sources 104, 204 may output the 10MHz frequency reference. As such, in addition to receiving the 1PPS signal, the RIUs 114, 214 may receive the 10MHz frequency reference from the clock sources 104, 204.

In one embodiment, the control module 330 may include instructions that, when executed by the processor(s) 310, cause the processor(s) 310 to determine a 1PPS receive time and a 1PPS period based on the 1PPS signal and with respect to the single network time. In one embodiment, the control module 330 may include instructions that, when executed by the processor(s) 310, cause the processor(s) 310 to determine the 1PPS receive time and the 1PPS period based on the 1PPS signal and the 10MHz frequency reference and with respect to the single network time. The 1PPS receive time is the time when the 1PPS signal is received by the first 114A, 214A, and/or the third 214E of the plurality of RIUs 114, 214. In other words, the 1PPS receive time is the time that the RIUs 114A, 214A, 214E connected to the clock source 104A, 204A, 204B receive a rising edge and/or a falling edge of the 1PPS signal. The control module 330 keeps track of the single network time and may utilize the 10MHz frequency reference to more accurately identify the timing associated with the 1PPS receive time. The control module 330 receives and stores the 1PPS receive time. As such, the control module 330 determines the relationship between the 1PPS receive time and the single network time. In other words, the control module 330 records and may timestamp the instant that the RIU 114A, 214A, 214E receives the rising edge and/or falling edge of the 1PPS signal in relation to the single network time. The control module 330 then determines duration of 1PPS period relative to the single network time and may utilize the 10MHz frequency reference to determine the 1PPS period. The 1PPS period is the duration between two consecutive rising edges or two consecutive falling edges of the 1PPS signal. As an example, the control module 330 records a first time the RIU 114A, 214A, 214E receives a first of two consecutive rising edges and a second time the RIU 114A, 214A, 214E receives a second of two consecutive rising edges. The first time and the second time are based on the single network time frame. The control module 330 may then timestamp and store the 1PPS receive time and the 1PPS period in relation to the single network time in a message.

In one embodiment, the control module 330 may include instructions that, when executed by the processor(s) 310, cause the processor(s) 310 to transmit, by the first 114A, 214A of the plurality of RIUs 114, 214, the message to a second 114B, 114C, 114D, 214B, 214C, 214D, 214E of the plurality of RIUs 114, 214. As previously mentioned, the message includes the 1PPS receive time and 1PPS period based on the single network time. The second of the RIUs 114, 214 refers to one of the RIUs 114, 214 other than the first 114A, 214A of the RIUs 114, 214. As an example, the message may include a timestamp associated with the 1PPS receive time and the 1PPS period based and/or relative to the single network time. As shown in FIG.1, the network 102 includes multiple RIUs 114B, 114C, 114D other than the RIU 114A connected to the clock source 104A. The control module 330 may control the RIU 114A connected to the clock source 104A to transmit the message to the other RIUs 114B, 114C, 114D in the network 102 in one or more various methods. As an example, the message may be a Time-Sensitive Network (TSN) message. In such an example, the control module 330 may control the RIU 114A connected to the clock source 104A to transmit the message as time-critical data traffic to the other RIUs 114B, 114C, 114D through the distribution system 106 in any suitable format.

In one embodiment, the control module 330 may include instructions that, when executed by the processor(s) 310, cause the processor(s) 310 to receive, by the second 114B, 114C, 114D, 214B, 214C, 214D, 214E of the plurality of RIUs 114, 214, the message. As such, the control module 330 may control the other RIUs 114B, 114C, 114D, 214B, 214C, 214D, 214E to receive the message. In one embodiment, the control module 330 may include instructions that, when executed by the processor(s) 310, cause the processor(s) 310 to extract, by the second 114B, 114C, 114D, 214B, 214C, 214D, 214E of the plurality of RIUs 114, 214, the 1PPS receive time and the 1PPS period from the message. Upon receiving the message, the control module 330 may control the other RIUs 114B, 114C, 114D, 214B, 214C, 214D, 214E to extract information from the message. The information may include the 1PPS receive time and the 1PPS period in relation to the single network time. As previously mentioned, the message may include a timestamp indicating the 1PPS receive time (for example, 420 seconds and 65,370,330 nanoseconds from network initialization) and the 1PPS period (for example, 999,999,980 nanoseconds) relative to the single network time.

In one embodiment, the control module 330 may include instructions that, when executed by the processor(s) 310, cause the processor(s) 310 to generate, by the second 114B, 114C, 114D, 214B, 214C, 214D, 214E of the plurality of RIUs 114, 214, a 1PPS clock based on at least the 1PPS receive time, the 1PPS period, and the single network time. The control module 330 may control the other RIUs 114B, 114C, 114D, 214B, 214C, 214D, 214E to generate a 1PPS clock, which is a clock that is synchronized to the 1PPS signal being outputted by the clock sources 104, 204. The control module 330 may control the other RIUs 114B, 114C, 114D, 214B, 214C, 214D, 214E to generate the 1PPS clock based on the information in the message. As an example, the RIUs 114B, 114C, 114D, 214B, 214C, 214D, 214E may generate the 1PPS clock based on the information including a timestamp indicating the 1PPS receive time and the 1PPS period relative to the single network time. In such an example, the other RIUs 114B, 114C, 114D, 214B, 214C, 214D, 214E may synchronize clocks within the other RIUs 114B, 114C, 114D, 214B, 214C, 214D, 214E to the 1PPS clock. The RIUs 114, 214 may then output clocks that are synchronized to the 1PPS clock to devices 108, 208 connected to the RIUs 114, 214.

In one embodiment, the control module 330 may include instructions that, when executed by the processor(s) 310, cause the processor(s) 310 to receive, by a third 214E of the plurality of RIUs 214, a second 1PPS signal. The third 214E of the RIUs 214 is one of the RIUs 214 other than the first 214A of the RIUs 214. As an example, a network 102, 202 may include multiple clock sources. As previously disclosed in FIG. 2 and as an example, the first RIU 214A is connected to the first clock source 204A and the third RIU 214E is connected to the second clock source 204B. The first and second clock sources 204 are both Legacy GPS. The first RIU 214A may receive the first 1PPS signal being outputted by the first clock source 204A and the third RIU 214E may receive the second 1PPS signal being output by the second clock source 204B. Additionally, the first RIU 214A may receive the first 10MHz frequency reference from the first clock source 204A and/or the third RIU 214E may receive the second 10MHz frequency reference from the second clock source 204B.

In a network 102, 202 with two or more clock sources 104, 204, the control module 330 may select the clock source 104, 204 to use for 1PPS signal based on one or more of a variety of methods. As an example, the control module 330 may select the clock source 104, 204 to use for the 1PPS signal based on IEEE 802.1AS Protocol, the IEEE 1588 Protocol, a selection by an integrator, and/or the Best Master Clock algorithm (BMCA). Upon selecting one clock source 104, 204 to provide the 1PPS signal, the control module 330 may periodically monitor the status of the 1PPS signal, the 10MHz frequency reference, and/or the clock source 104, 204 providing the 1PPS signal. In a case where the control module 330 determines that one clock source 104, 204 is no longer providing a viable 1PPS signal, the control module 330 may select another clock source 104, 204 to provide another 1PPS signal from the remaining available clock sources 104, 204 in the network 102, 202. The control module 330 may utilize the methods previously mentioned to select another clock source 104, 204 to provide another 1PPS signal.

As an example and as shown in FIG. 2, the first clock source 204A provides a 1PPS signal to the first RIU 214A. The control module 330 may periodically monitor the first clock source 204A, the first 1PPS signal, and/or the first 10MHz frequency reference to ensure that the first clock source 204A is functioning, and the first RIU 214A is receiving a valid 1PPS signal and/or a 10MHz frequency reference. In a case where the control module 330 determines that the first RIU 214A is no longer receiving a valid 1PPS signal and/or 10MHz frequency reference, the control module 330 may identify other clock sources 204B within the network 202. In the example shown in FIG. 2, the control module 330 may identify the second clock source 204B and may then receive the second 1PPS signal and/or the second 10MHz frequency reference from the second clock source 204B. As such, the control module 330 may control the third RIU 214E connected to the second clock source 204B to receive the second 1PPS signal and/or the second 10MHz frequency reference.

In one embodiment, the control module 330 may include instructions that, when executed by the processor(s) 310, cause the processor(s) 310 to determine a second 1PPS receive time and a second 1PPS period based on the second 1PPS signal and with respect to the single network time. The second 1PPS receive time refers to when the second 1PPS signal is received by the third 214E of the RIUs 214. In other words, the second 1PPS receive time is the time that the third RIU 214E connected to the second clock source 204B receives a rising edge and/or a falling edge of the second 1PPS signal. The control module 330 keeps track of the single network time and may utilize the second 10MHz frequency reference to more accurately identify the timing associated with the second 1PPS receive time. The control module 330 receives and stores the second 1PPS receive time. As such, the control module 330 determines the relationship between the second 1PPS receive time and the single network time. In other words, the control module 330 records the instant that the third RIU 214E receives the rising edge and/or falling edge of the second 1PPS signal in relation to the single network time. The control module 330 then determines duration of the second 1PPS period relative to the single network time and may utilize the second 10MHz frequency reference to further determine the second 1PPS period. The second 1PPS period is the duration between two consecutive rising edges or two consecutive falling edges of the second 1PPS signal. As an example, the control module 330 records a first time the third RIU 214E receives a first of two consecutive rising edges and a second time the third RIU 214E receives a second of two consecutive rising edges. The first time and the second time are based on the single network time frame, i.e. the Grand Master Clock. The control module 330 may then store the second 1PPS receive time and the second 1PPS period in relation to the single network time in a second message. As an example, the RIU 214E may detect the first 1PPS rising edge at 46 seconds and 270,600,058 nanoseconds in the single network time. The RIU 214E may detect the second 1PPS rising edge at 47 seconds and 270,600,068 nanoseconds in the single network time. The RIU 214E would then determine the 1PPS period to be 1 sec and 10 nanoseconds in the single network time. The RIU 214E would convey this 1PPS receive time and 1PPS period to the network. The RIU 214B, 214C, 214D would, at 48 seconds and 270,600,078 nanoseconds in the single network time, transmit the 1PPS to DUT1, DUT2, and DUT4. A new 1PPS receive time would ensure the transmission was in allowed tolerances. The new 1PPS period could also be used with the previous value(s) to set a more accurate trend.

In one embodiment, the control module 330 may include instructions that, when executed by the processor(s) 310, cause the processor(s) 310 to transmit, by the third 214E of the plurality of RIUs 214 and in response to the first 214A of the RIUs 214 being unable to transmit the message, a second message to a fourth 214A, 214B, 214C, 214D of the plurality of RIUs 214 in place of the message. The second message includes the second 1PPS receive time and the second 1PPS period. The fourth 214A, 214B, 214C, 214D of the RIUs 214 is one of the RIUs 214 other than the third 214E of the RIUs 214.

Like the message, the second message may include a timestamp associated with the second 1PPS receive time and the second 1PPS period based and/or relative to the single network time. As shown in FIG.2, the network 202 includes multiple RIUs 214 other than the third RIU 214E connected to the second clock source 204B. The control module 330 may control the third RIU 214E connected to the second clock source 204B to transmit the second message to the other RIUs 214A, 214B, 214C, 214D in the network 202 in one or more various methods. As an example, the second message may be a Time-Sensitive Network (TSN) message. In such an example, the control module 330 may control the third RIU 214E connected to the second clock source 204B to transmit the second message as time-critical data traffic to the other RIUs 214A, 214B, 214C, 214D through the distribution system 106 in any suitable format.

In summary, the time synchronization system 100 may include two portions - a transmit portion and a receive portion. In the transmit portion of the time synchronization system 100, the control module 330 may include instructions to synchronize the RIUs 114, 214 to a single network time, receive a 1PPS signal from a clock source 104, 204, determine the 1PPS receive time and the 1PPS period based on the 1PPS signal and with respect to the single network time, and transmit a message including the 1PPS receive time and 1PPS period to another time synchronization system 100 or another RIU 114, 214.

In the receive portion of the time synchronization system 100, the control module 330 may include instructions to receive the message from another time synchronization system 100 or another RIU 114, 214, extract the 1PPS receive time and the 1PPS period from the message, generate a 1PPS clock based on at least the 1PPS receive time, the 1PPS period, and the single network time, and output the 1PPS clock to devices 108, 208 in the network 102, 202.

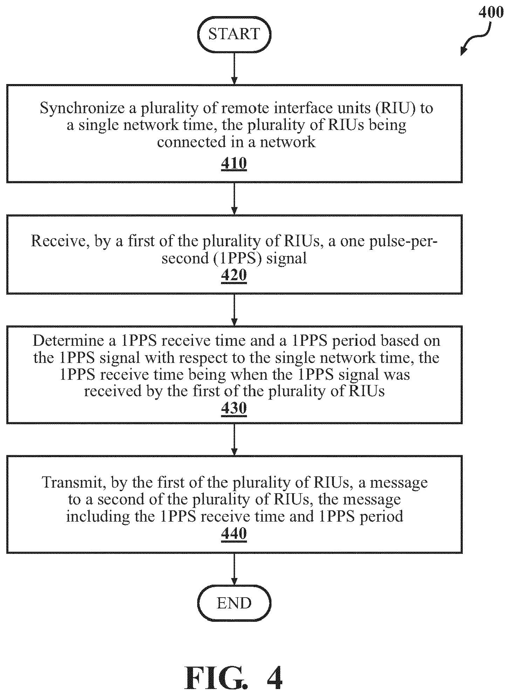

FIG. 4 is a flowchart illustrating one embodiment of a method 400 associated with providing time synchronization between devices 108, 208 in a network 102, 202. The method 400 will be described from the viewpoint of the time synchronization system 100 of FIGS. 1-3. However, the method 400 may be adapted to be executed in any one of several different situations and not necessarily by the time synchronization system 100 of FIGS. 1-3.

At step 410, the control module 330 may cause the processor(s) 310 to synchronize a plurality of RIUs 114, 214 to a single network time. As previously mentioned, the RIUs 114, 214 are connected within the network 102, 202. The control module 330 may send a control signal to the RIUs 114, 214, causing the RIUs 114, 214 to synchronize the clocks associated with the RIUs 114, 214. The control module 330 may select the Grand Master Clock from the clocks within the RIUs 114, 214 using, as an example, the BMCA, and may use selected Grand Master Clock for the single network time. The control module 330 may then synchronize the remaining clocks to the selected Grand Master Clock.

At step 420, the control module 330 may cause the processor(s) 310 to receive, by a first 114A, 214A of the plurality of RIUs 114, 214, a one pulse-per-second (1PPS) signal. As shown in FIGS. 1 and 2, one or more RIUs 114, 214 may be connected to one or more clock sources 104, 204, respectively. The control module 330 may select one of the available clock sources 104, 204 and the RIU 114A, 214A connected to the selected clock source 104A, 204A. The control module 330 may cause the selected RIU 114A, 214A to receive the 1PPS signal and/or the 10MHz frequency reference from the related clock source 104A, 204A.

At step 430, the control module 330 may cause the processor(s) 310 to determine a 1PPS receive time and a 1PPS period based on the 1PPS signal and with respect to the single network time. The 1PPS receive time is when the 1PPS signal is received by the selected RIU 114A, 214A. More specifically, the 1PPS receive time is when a rising edge or a falling edge of the 1PPS signal is received by the selected RIU 114A, 214A. As such, the RIU 114A, 214A may utilize any suitable clock edge detection method such as monitoring for a voltage level change of the 1PPS signal and timestamping when a voltage level change occurs. The control module 330 may determine the 1PPS period based on the time difference between two consecutive rising edges and/or two consecutive falling edges. The control module 330 may then record the time difference in a message.

At step 440, the control module 330 may cause the processor(s) 310 to transmit, by the first 114A, 214A of the plurality of RIUs 114, 214, the message to a second 114B, 114C, 114D, 214B, 214C, 214D, 214E of the plurality of RIUs 114, 214. The message may include the 1PPS receive time and 1PPS period. The second 114B, 114C, 114D, 214B, 214C, 214D, 214E of the RIUs 114, 214 is one of the RIUs 114, 214 other than the first 114A, 214A of the RIUs 114, 214. The control module 330 may control the RIU 114A, 214A to transmit the message through the network to the other RIUs 114B, 114C, 114D, 214B, 214C, 214D, 214E. The control module 330 may transmit the message utilizing one of a variety of protocols such as the TSN protocol.

Using the aviation system disclosed above as an example to illustrate FIG. 4, the system establishes the single network time using one of the switches 110 as Grand Master Clock (GMC) and following IEEE-802.1 AS in step 410. This time is likely transmitted as the time since GMC initialization assuming Unix Epoch of January 1 1970 at 00:00:00 UTC. At step 420, the RIU 114 connected to the GPS/INS device 104 receives the first 1PPS output and records this time. Assuming a nominal 60 sec initialization, this time may be on the order of 00:00:01.894025641. At step 430, the RIU 114 connected to the GPS/INS device 104 receives the second 1PPS output and records this time. This time may be on the order of 00:00:02.894025631 defining a 1PPS period of 0.999999990. At step 440, the RIU 114 transmits the 1PPS receive time and1PPS period to the other RIUs 114.

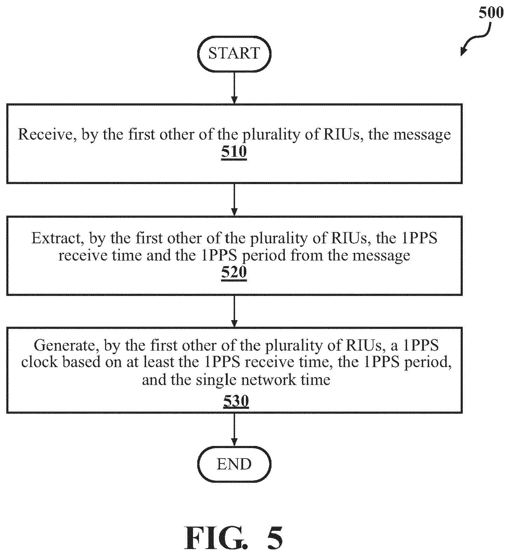

FIG. 5 is a flowchart illustrating another embodiment of a method 500 associated with providing time synchronization between devices in a network 102, 202. The method 500 will be described from the viewpoint of the time synchronization system 100 of FIGS. 1-3. However, the method 500 may be adapted to be executed in any one of several different situations and not necessarily by the time synchronization system 100 of FIGS. 1-3.

At step 510, the control module 330 may cause the processor(s) 310 to receive, by the second 114B, 114C, 114D, 214B, 214C, 214D, 214E of the plurality of RIUs 114, 214, the message. One or more of the other RIUs 114B, 114C, 114D, 214B, 214C, 214D, 214E may receive message via the network.

At step 520, the control module 330 may cause the processor(s) 310 to extract, by the second 114B, 114C, 114D, 214B, 214C, 214D, 214E of the plurality of RIUs 114, 214, the 1PPS receive time and the 1PPS period from the message. The other RIUs 114B, 114C, 114D, 214B, 214C, 214D, 214E receiving the message may extract information, such as the 1PPS receive time and the 1PPS period, from the message using any suitable method.

At step 530, the control module 330 may cause the processor(s) 310 to generate, by the second 114B, 114C, 114D, 214B, 214C, 214D, 214E of the plurality of RIUs 114, 214, a 1PPS clock based on at least the 1PPS receive time, the 1PPS period, and the single network time. As such, the other RIUs 114B, 114C, 114D, 214B, 214C, 214D, 214E may generate the 1PPS clock based on the 1PPS receive time and the 1PPS period extracted from the message and the single network time. The other RIUs 114B, 114C, 114D, 214B, 214C, 214D, 214E may then output the 1PPS clock as a clock to be utilized by the devices connected to the RIUs 114, 214.

Using the aviation system disclosed above as an example to illustrate FIG. 5, the RIUs connected to the SMC, VOR, and MIDS receives the 1PPS receive time and 1PPS Period as step 510. As Step 520, these RIUs store the 1PPS receive time plus the 1PPS Period as the time the 1PPS interface circuitry will be initiated. Note that the time delay between 1PPS signal receipt and receipt of this information has no consequence as long as the receiving RIU has enough time to process the message and initialize the 1PPS output within the second. In Step 530, these RIUs transmit the 1PPS single at the program time. The RIU connected SMC, VOR, and MIDS can then use this input to achieve weapon/sensor level alignment, low rate signal synchronization, and high rate signal synchronization.

As previously mentioned, for the operation of a system to be time-coordinated and to ensure that the timing requirements of the system are being met, the devices in the systems may need to operate in unison or at least on a single clock such that the devices are in sync.

Current methods of transmitting the single clock to multiple devices include connecting cables such as coaxial cables or differential paired cables between the GPS and the multiple devices. However and as previously mentioned, the length of the cables between the GPS and the devices may cause delays such that the devices may not achieve time synchronization. Current methods may attempt to achieve or maintain time synchronization by including additional hardware such as repeaters and/or distribution circuits. The weight of the cables and the additional hardware may be significant such that the weight of the cables and the additional hardware on, as an example, an aircraft may weigh down the aircraft and have a negative impact. Another disadvantage is the cost of cables, the physical limitations of cables, as well as the installation, the maintenance, the inspection, and the removal of cables. Another disadvantage is in a case where there is a single cable between the GPS and a device, there is no redundancy. As such, if the cable is no longer functional, the device may be unable to synchronize with the GPS and the other devices. Alternatively, multiple cables may be connected between the GPS and each device to include redundancy.

The embodiments disclosed herein present various advantages over conventional technologies that provide time synchronization. First, the embodiments operate without a physical connection between the clock source such as the GPS and the devices on the network. As such, the embodiments eliminate the need for substantial cables and wiring. Also, devices may be located at any suitable location within, as an example, an aircraft without requiring additional cables and/or wiring. Second, the embodiments utilize existing network time protocols such as TSN gPTP (IEEE 802. 1AS) time to broadcast the 1PPS signal and the 1PPS period. The embodiments may also utilize other Ethernet time protocols such as IEEE 1588 or White Rabbit. Third, the embodiments include RIUs generating a 1PPS clock that is within the accuracy and tolerance level for avionics use. Fourth, the embodiments can incorporate redundancy to make the system and the network more resilient without additional hardware.

Detailed embodiments are disclosed herein. However, it is to be understood that the disclosed embodiments are intended only as examples. Therefore, specific structural and functional details disclosed herein are not to be interpreted as limiting, but merely as a basis for the claims and as a representative basis for teaching one skilled in the art to variously employ the aspects herein in virtually any appropriately detailed structure. Further, the terms and phrases used herein are not intended to be limiting but rather to provide an understandable description of possible implementations. Various embodiments are shown in FIGS. 1-5, but the embodiments are not limited to the illustrated structure or application.

The flowcharts and block diagrams in the figures illustrate the architecture, functionality, and operation of possible implementations of systems, methods, and computer program products according to various embodiments. In this regard, each block in the flowcharts or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

The systems, components and/or processes described above can be realized in hardware or a combination of hardware and software and can be realized in a centralized fashion in one processing system or in a distributed fashion where different elements are spread across several interconnected processing systems. Any kind of processing system or another apparatus adapted for carrying out the methods described herein is suited. A typical combination of hardware and software can be a processing system with computer-usable program code that, when being loaded and executed, controls the processing system such that it carries out the methods described herein. The systems, components and/or processes also can be embedded in a computer-readable storage, such as a computer program product or other data programs storage device, readable by a machine, tangibly embodying a program of instructions executable by the machine to perform methods and processes described herein. These elements also can be embedded in an application product which comprises all the features enabling the implementation of the methods described herein and which when loaded in a processing system, is able to carry out these methods.

Furthermore, arrangements described herein may take the form of a computer program product embodied in one or more computer-readable media having computer-readable program code embodied, e.g., stored, thereon. Any combination of one or more computer-readable media may be utilized. The computer-readable medium may be a computer-readable signal medium or a computer-readable storage medium. The phrase "computer-readable storage medium" means a non-transitory storage medium. A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: a portable computer diskette, a hard disk drive (HDD), a solid-state drive (SSD), a read-only memory (ROM), an erasable programmable read-only memory (EPROM or Flash memory), a portable compact disc read-only memory (CD-ROM), a digital versatile disc (DVD), an optical storage device, a magnetic storage device, or any suitable combination of the foregoing. In the context of this document, a computer-readable storage medium may be any tangible medium that can contain or store a program for use by or in connection with an instruction execution system, apparatus, or device.

Generally, modules, as used herein, include routines, programs, objects, components, data structures, and so on that perform particular tasks or implement particular data types. In further aspects, a memory generally stores the noted modules. The memory associated with a module may be a buffer or cache embedded within a processor, a RAM, a ROM, a flash memory, or another suitable electronic storage medium. In still further aspects, a module as envisioned by the present disclosure is implemented as an application-specific integrated circuit (ASIC), a hardware component of a system on a chip (SoC), as a programmable logic array (PLA), or as another suitable hardware component that is embedded with a defined configuration set (e.g., instructions) for performing the disclosed functions.

Program code embodied on a computer-readable medium may be transmitted using any appropriate medium, including but not limited to wireless, wireline, optical fiber, cable, RF, etc., or any suitable combination of the foregoing. Computer program code for carrying out operations for aspects of the present arrangements may be written in any combination of one or more programming languages, including an object-oriented programming language such as Java^{™}, Smalltalk, C++, or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The terms "a" and "an," as used herein, are defined as one or more than one. The term "plurality," as used herein, is defined as two or more than two. The term "another," as used herein, is defined as at least a second or more. The terms "including" and/or "having," as used herein, are defined as comprising (i.e., open language). The phrase "at least one of ... and ...." as used herein refers to and encompasses any and all possible combinations of one or more of the associated listed items. As an example, the phrase "at least one of A, B, and C" includes A only, B only, C only, or any combination thereof (e.g., AB, AC, BC, or ABC).

Aspects herein can be embodied in other forms without departing from the scope of the invention as defined in the appended claims. Accordingly, reference should be made to the following claims, rather than to the foregoing specification, as indicating the scope hereof.

## Claims

1. A method (400) comprising:
synchronizing (410) a plurality of remote interface units, RIU, (114A, 114B, 114C, 114D) to a single network time, the plurality of RIUs (114A, 114B, 114C, 114D) being connected in a network (102);
receiving (420), by a first (114A) of the plurality of RIUs (114A, 114B, 114C, 114D), a one pulse-per-second, 1PPS, signal; the method **characterized by**:
determining (430) a 1PPS receive time and a 1PPS period based on the 1PPS signal and with respect to the single network time, the 1PPS receive time being when the 1PPS signal is received by the first (114A) of the plurality of RIUs (114A, 114B, 114C, 114D); and
transmitting (440), by the first (114A) of the plurality of RIUs (114A, 114B, 114C, 114D), a message to a first other (114B, 114C, 114D) of the plurality of RIUs (114A, 114B, 114C, 114D) , the message including the 1PPS receive time and 1PPS period, and the first other (114B, 114C, 114D) of the plurality of RIUs (114A, 114B, 114C, 114D) being one of the plurality of RIUs (114A, 114B, 114C, 114D) other than the first (114A) of the plurality of RIUs (114A, 114B, 114C, 114D).

2. The method (400) of claim 1, further comprising:
receiving (510), by the first other (114B, 114C, 114D) of the plurality of RIUs (114A, 114B, 114C, 114D), the message;
extracting (520), by the first other (114B, 114C, 114D) of the plurality of RIUs (114A, 114B, 114C, 114D), the 1PPS receive time and the 1PPS period from the message; and
generating (530), by the first other (114B, 114C, 114D) of the plurality of RIUs (114A, 114B, 114C, 114D), a 1PPS clock based on at least the 1PPS receive time, the 1PPS period, and the single network time.

3. The method (400) of any preceding claim, wherein the 1PPS signal originates from at least one of:
a global positioning system, GPS;
Assured Positioning, Navigation, and Timing, A-PNT, device;
a time sensitive network, TSN, Native Navigation Line Replaceable Unit, LRU;
a radio beacon;
a frequency standard;
a precision oscillator; or
an atomic clock.

4. The method (400) of any preceding claim, wherein the single network time is based on at least one of:
precision time protocol, PTP; or
generic precision time protocol, gPTP.

5. The method (400) of any preceding claim, wherein the message is a Time-Sensitive Network, TSN, message.

6. The method (400) of any preceding claim, further comprising:
receiving, by the first (114A) of the plurality of RIUs (114A, 114B, 114C, 114D), a 10MHz frequency reference; and
determining the 1PPS receive time and the 1PPS period based on the 1PPS signal and the 10MHz frequency reference and with respect to the single network time.

7. The method (400) of any preceding claim, further comprising:
receiving, by a second (214E) of the plurality of RIUs (214A, 214B, 214C, 214D, 214E), a second 1PPS signal, the second (214E) of the plurality of RIUs (214A, 214B, 214C, 214D, 214E) being one of the plurality of RIUs (214A, 214B, 214C, 214D, 214E) other than the first (214A) of the plurality of RIUs (214A, 214B, 214C, 214D, 214E);
determining a second 1PPS receive time and a second 1PPS period based on the second 1PPS signal and with respect to the single network time, the second 1PPS receive time being when the second 1PPS signal is received by the second (214E) of the plurality of RIUs (214A, 214B, 214C, 214D, 214E); and
transmitting, by the second (214E) of the plurality of RIUs (214A, 214B, 214C, 214D, 214E) and in response to the first (214A) of the plurality of RIUs (214A, 214B, 214C, 214D, 214E) being unable to transmit the message, a second message to a second other (214A, 214B, 214C, 214D) of the plurality of RIUs (214A, 214B, 214C, 214D, 214E) in place of the message, the second message including the second 1PPS receive time and the second 1PPS period, and the second other (214A, 214B, 214C, 214D) of the plurality of RIUs (214A, 214B, 214C, 214D, 214E) being one of the plurality of RIUs other than the second (214E) of the plurality of RIUs (214A, 214B, 214C, 214D, 214E).

8. A system (100) comprising:
a processor (310); and
a memory (320) storing machine-readable instructions that, when executed by the processor (310), cause the processor (310) to:
synchronize a plurality of remote interface units, RIU, (114A, 114B, 114C, 114D) to a single network time, the plurality of RIUs (114A, 114B, 114C, 114D) being connected in a network (102);
receive, by a first (114A) of the plurality of RIUs (114A, 114B, 114C, 114D), a one pulse-per-second, 1PPS, signal;
determine a 1PPS receive time and a 1PPS period based on the 1PPS signal and with respect to the single network time, the 1PPS receive time being when the 1PPS signal is received by the first (114A) of the plurality of RIUs (114A, 114B, 114C, 114D); and
transmit, by the first (114A) of the plurality of RIUs (114A, 114B, 114C, 114D), a message to a first other (114B, 114C, 114D) of the plurality of RIUs (114A, 114B, 114C, 114D), the message including the 1PPS receive time and 1PPS period, and the first other (114B, 114C, 114D) of the plurality of RIUs (114A, 114B, 114C, 114D) being one of the plurality of RIUs (114A, 114B, 114C, 114D) other than the first (114A) of the plurality of RIUs (114A, 114B, 114C, 114D).

9. The system (100) of claim 8, wherein the machine-readable instructions further include instructions that when executed by the processor (310) cause the processor (310) to:
receive, by the first other (114B, 114C, 114D) of the plurality of RIUs (114A, 114B, 114C, 114D), the message;
extract, by the first other (114B, 114C, 114D) of the plurality of RIUs (114A, 114B, 114C, 114D), the 1PPS receive time and the 1PPS period from the message; and
generate, by the first other (114B, 114C, 114D) of the plurality of RIUs (114A, 114B, 114C, 114D), a 1PPS clock based on at least the 1PPS receive time, the 1PPS period, and the single network time.

10. The system (100) of claim 8 or 9, wherein the 1PPS signal originates from at least one of:
a global positioning system, GPS;
Assured Positioning, Navigation, and Timing, A-PNT, device;
a time sensitive network, TSN, Native Navigation Line Replaceable Unit, LRU;
a radio beacon;
a frequency standard;
a precision oscillator; or
an atomic clock.

11. The system (100) of any of claims 8 to 10, wherein the single network time is based on at least one of:
precision time protocol, PTP; or
generic precision time protocol, gPTP.

12. The system (100) of any of claims 8 to 11, wherein the message is a Time-Sensitive Network, TSN, message.

13. The system (100) of any of claims 8 to 12, wherein the machine-readable instructions further include instructions that when executed by the processor (310) cause the processor (310) to:
receive, by the first (114A) of the plurality of RIUs (114A, 114B, 114C, 114D), a 10MHz frequency reference; and
determine the 1PPS receive time and the 1PPS period based on the 1PPS signal and the 10MHz frequency reference and with respect to the single network time.

14. The system (100) of any of claims 8 to 13, wherein the machine-readable instructions further include instructions that when executed by the processor (310) cause the processor (310) to:
receive, by a second (214E) of the plurality of RIUs (214A, 214B, 214C, 214D, 214E), a second 1PPS signal, the second (214E) of the plurality of RIUs (214A, 214B, 214C, 214D, 214E) being one of the plurality of RIUs (214A, 214B, 214C, 214D, 214E) other than the first (214A) of the plurality of RIUs (214A, 214B, 214C, 214D, 214E);
determine a second 1PPS receive time and a second 1PPS period based on the second 1PPS signal and with respect to the single network time, the second 1PPS receive time being when the second 1PPS signal is received by the second (214E) of the plurality of RIUs (214A, 214B, 214C, 214D, 214E); and
transmit, by the second (214E) of the plurality of RIUs (214A, 214B, 214C, 214D, 214E) and in response to the first (214A) of the plurality of RIUs (214A, 214B, 214C, 214D, 214E) being unable to transmit the message, a second message to a second other (214A, 214B, 214C, 214D) of the plurality of RIUs (214A, 214B, 214C, 214D, 214E) in place of the message, the second message including the second 1PPS receive time and the second 1PPS period, and the second other (214A, 214B, 214C, 214D) of the plurality of RIUs (214A, 214B, 214C, 214D, 214E) being one of the plurality of RIUs (214A, 214B, 214C, 214D, 214E) other than the second (214E) of the plurality of RIUs (214A, 214B, 214C, 214D, 214E).

15. A non-transitory computer-readable medium including instructions that when executed by a processor cause the processor to execute the method of any of claims 1-7.

## Patentansprüche

1. Verfahren (400), das Folgendes umfasst:
Synchronisieren (410) einer Vielzahl von Fernschnittstelleneinheiten, RIU, (114A, 114B, 114C, 114D) auf eine einheitliche Netzwerkzeit, wobei die mehreren RIUs (114A, 114B, 114C, 114D) in einem Netzwerk (102) verbunden ist;
Empfangen (420) eines Signals mit einem Impuls pro Sekunde, 1PPS, durch eine erste (114A) der mehreren RIUs (114A, 114B, 114C, 114D); wobei das Verfahren durch Folgendes gekennzeichnet ist:
Bestimmen (430) einer 1PPS-Empfangszeit und einer 1PPS-Periode auf der Grundlage des 1PPS-Signals und in Bezug auf die einheitliche Netzwerkzeit, wobei die 1PPS-Empfangszeit der Zeitpunkt ist, zu dem das 1PPS-Signal von der ersten (114A) der mehreren RIUs (114A, 114B, 114C, 114D) empfangen wird; und
Senden (440) einer Nachricht durch die erste (114A) der mehreren RIUs (114A, 114B, 114C, 114D) an eine erste andere (114B, 114C, 114D) der mehreren RIUs (114A, 114B, 114C, 114D), wobei die Nachricht die 1PPS-Empfangszeit und die 1PPS-Periode umfasst und die erste andere (114B, 114C, 114D) der mehreren RIUs (114A, 114B, 114C, 114D) eine der mehreren RIUs (114A, 114B, 114C, 114D) ist, die nicht die erste (114A) der mehreren RIUs (114A, 114B, 114C, 114D) ist.

2. Verfahren (400) nach Anspruch 1, ferner umfassend:
Empfangen (510) der Nachricht durch die erste andere (114B, 114C, 114D) der mehreren RIUs (114A, 114B, 114C, 114D);
Extrahieren (520) der 1PPS-Empfangszeit und der 1PPS-Periode aus der Nachricht durch die erste andere (114B, 114C, 114D) der mehreren RIUs (114A, 114B, 114C, 114D); und
Erzeugen (530) eines 1PPS-Takts durch die erste andere (114B, 114C, 114D) der mehreren RIUs (114A, 114B, 114C, 114D), basierend auf mindestens der 1PPS-Empfangszeit, der 1PPS-Periode und der einheitlichen Netzwerkzeit.

3. Verfahren (400) nach einem vorstehenden Anspruch, wobei das 1PPS-Signal von mindestens einem der folgenden Elemente stammt:
einem globalen Positionierungssystem, GPS;
einem Gerät für zuverlässige Positionsbestimmung, Navigation und Zeitmessung, A-PNT;
einer zeitsensitiven Netzwerk-, TSN, im Feld austauschbaren Navigations-Baugruppe, LRU;
einer Funkbake;
einem Frequenzstandard;
einem Präzisionsoszillator; oder
einer Atomuhr.

4. Verfahren (400) nach einem vorstehenden Anspruch, wobei die einheitliche Netzwerkzeit auf mindestens einem der folgenden Elemente basiert:
Präzisionszeitprotokoll, PTP; oder
Generisches Präzisionszeitprotokoll, gPTP.

5. Verfahren (400) nach einem vorstehenden Anspruch, wobei es sich bei der Nachricht um eine Nachricht für ein zeitsensitives Netzwerk, TSN, handelt.

6. Verfahren (400) nach einem vorstehenden Anspruch, das ferner umfasst:
Empfangen einer 10-MHz-Frequenzreferenz durch die erste (114A) der mehreren RIUs (114A, 114B, 114C, 114D); und
Bestimmen der 1PPS-Empfangszeit und der 1PPS-Periode auf der Grundlage des 1PPS-Signals und der 10-MHz-Frequenzreferenz sowie in Bezug auf die einheitliche Netzwerkzeit.

7. Verfahren (400) nach einem vorstehenden Anspruch, das ferner umfasst:
Empfangen eines zweiten 1PPS-Signals durch eine zweite (214E) der mehreren RIUs (214A, 214B, 214C, 214D, 214E), wobei die zweite (214E) der mehreren RIUs (214A, 214B, 214C, 214D, 214E) eine der mehreren RIUs (214A, 214B, 214C, 214D, 214E) ist,
die nicht die erste (214A) der mehreren RIUs (214A, 214B, 214C, 214D, 214E) ist;
Bestimmen einer zweiten 1PPS-Empfangszeit und einer zweiten 1PPS-Periode auf der Grundlage des zweiten 1PPS-Signals und in Bezug auf die einheitliche Netzwerkzeit, wobei die zweite 1PPS-Empfangszeit der Zeitpunkt ist, zu dem das zweite 1PPS-Signal von der zweiten (214E) der mehreren RIUs (214A, 214B, 214C, 214D, 214E) empfangen wird; und
Senden einer zweiten Nachricht durch die zweite (214E) der mehreren RIUs (214A, 214B, 214C, 214D, 214E) und als Reaktion darauf, dass die erste (214A) der mehreren RIUs (214A, 214B, 214C, 214D, 214E) nicht in der Lage ist, die Nachricht zu senden, an eine zweite andere (214A, 214B, 214C, 214D) der mehreren RIUs (214A, 214B, 214C, 214D, 214E) anstelle der Nachricht, wobei die zweite Nachricht die zweite 1PPS-Empfangszeit und die zweite 1PPS-Periode enthält, und wobei die zweite andere (214A, 214B, 214C, 214D) der mehreren RIUs (214A, 214B, 214C, 214D, 214E) eine der mehreren RIUs ist, die nicht die zweite (214E) der mehreren RIUs (214A, 214B, 214C, 214D, 214E) ist.

8. System (100), umfassend:
einen Prozessor (310); und
einen Speicher (320), der maschinenlesbare Befehle speichert, die, wenn sie vom Prozessor (310) ausgeführt werden, den Prozessor (310) dazu veranlassen,
eine Vielzahl von Fernschnittstelleneinheiten, RIU, (114A, 114B, 114C, 114D) auf eine einheitliche Netzwerkzeit zu synchronisieren, wobei die mehreren RIUs (114A, 114B, 114C, 114D) in einem Netzwerk (102) verbunden sind;
über eine erste (114A) der mehreren RIUs (114A, 114B, 114C, 114D) ein Signal mit einem Impuls pro Sekunde, 1PPS, zu empfangen;
eine 1PPS-Empfangszeit und eine 1PPS-Periode auf der Grundlage des 1PPS-Signals und in Bezug auf die einheitliche Netzwerkzeit zu bestimmen, wobei die 1PPS-Empfangszeit der Zeitpunkt ist, zu dem das 1PPS-Signal von der ersten (114A) der mehreren RIUs (114A, 114B, 114C, 114D) empfangen wird; und
eine Nachricht durch die erste (114A) der mehreren RIUs (114A, 114B, 114C, 114D) an eine erste andere (114B, 114C, 114D) der mehreren RIUs (114A, 114B, 114C, 114D) zu senden, wobei die Nachricht die 1PPS-Empfangszeit und die 1PPS-Periode umfasst und
die erste andere (114B, 114C, 114D) der mehreren RIUs (114A, 114B, 114C, 114D) eine der mehreren RIUs (114A, 114B, 114C, 114D) ist, die nicht die erste (114A) der mehreren RIUs (114A, 114B, 114C, 114D) ist.

9. System (100) nach Anspruch 8, wobei die maschinenlesbaren Befehle ferner Befehle umfassen, die, wenn sie vom Prozessor (310) ausgeführt werden, den Prozessor (310) dazu veranlassen,
die Nachricht durch die erste andere (114B, 114C, 114D) der mehreren RIUs (114A, 114B, 114C, 114D) zu empfangen;
die 1PPS-Empfangszeit und die 1PPS-Periode aus der Nachricht durch die erste andere (114B, 114C, 114D) der mehreren RIUs (114A, 114B, 114C, 114D) zu extrahieren; und einen 1PPS-Takt durch die erste andere (114B, 114C, 114D) der mehreren RIUs (114A, 114B, 114C, 114D), basierend auf mindestens der 1PPS-Empfangszeit, der 1PPS-Periode und der einheitlichen Netzwerkzeit zu erzeugen.

10. System (100) nach Anspruch 8 oder 9, wobei das 1PPS-Signal von mindestens einem der folgenden Elemente stammt:
einem globalen Positionierungssystem, GPS;
einem Gerät für zuverlässige Positionsbestimmung, Navigation und Zeitmessung, A-PNT;
einer zeitsensitiven Netzwerk-, TSN, im Feld austauschbaren Navigations-Baugruppe, LRU;
einer Funkbake;
einem Frequenzstandard;
einem Präzisionsoszillator; oder
einer Atomuhr.

11. System (100) nach einem der Ansprüche 8 bis 10, wobei die einheitliche Netzwerkzeit auf mindestens einem der folgenden Elemente basiert:
Präzisionszeitprotokoll, PTP; oder
Generisches Präzisionszeitprotokoll, gPTP.

12. System (100) nach einem der Ansprüche 8 bis 11, wobei es sich bei der Nachricht um eine Nachricht für ein zeitsensitives Netzwerk, TSN, handelt.

13. System (100) nach einem der Ansprüche 8 bis 12, wobei die maschinenlesbaren Befehle ferner Befehle umfassen, die, wenn sie vom Prozessor (310) ausgeführt werden, den Prozessor (310) dazu veranlassen,
eine 10-MHz-Frequenzreferenz durch die erste (114A) der mehreren RIUs (114A, 114B, 114C, 114D) zu empfangen; und
die 1PPS-Empfangszeit und die 1PPS-Periode auf der Grundlage des 1PPS-Signals und der 10-MHz-Frequenzreferenz sowie in Bezug auf die einheitliche Netzwerkzeit zu bestimmen.

14. System (100) nach einem der Ansprüche 8 bis 13, wobei die maschinenlesbaren Befehle ferner Befehle umfassen, die, wenn sie vom Prozessor (310) ausgeführt werden, den Prozessor (310) dazu veranlassen,
ein zweites 1PPS-Signal durch eine zweite (214E) der mehreren RIUs (214A, 214B, 214C, 214D, 214E) zu empfangen, wobei die zweite (214E) der mehreren RIUs (214A, 214B, 214C, 214D, 214E) eine der mehreren RIUs (214A, 214B, 214C, 214D, 214E) ist, die nicht die erste (214A) der mehreren RIUs (214A, 214B, 214C, 214D, 214E) ist;
eine zweite 1PPS-Empfangszeit und eine zweite 1PPS-Periode auf der Grundlage des zweiten 1PPS-Signals und in Bezug auf die einheitliche Netzwerkzeit zu bestimmen, wobei die zweite 1PPS-Empfangszeit der Zeitpunkt ist, zu dem das zweite 1PPS-Signal von der zweiten (214E) der mehreren RIUs (214A, 214B, 214C, 214D, 214E) empfangen wird; und
eine zweite Nachricht durch die zweite (214E) der mehreren RIUs (214A, 214B, 214C, 214D, 214E) und als Reaktion darauf, dass die erste (214A) der mehreren RIUs (214A, 214B, 214C, 214D, 214E) nicht in der Lage ist, die Nachricht zu senden, an eine zweite andere (214A, 214B, 214C, 214D) der mehreren RIUs (214A, 214B, 214C, 214D, 214E) anstelle der Nachricht zu senden, wobei die zweite Nachricht die zweite 1PPS-Empfangszeit und die zweite 1PPS-Periode enthält, und wobei die zweite andere (214A, 214B, 214C, 214D) der mehreren RIUs (214A, 214B, 214C, 214D, 214E) eine der mehreren RIUs (214A, 214B, 214C, 214D, 214E) ist, die nicht die zweite (214E) der mehreren RIUs (214A, 214B, 214C, 214D, 214E) ist.

15. Ein nichttransitorisches, computerlesbares Medium, das Befehle enthält, die, wenn sie von einem Prozessor ausgeführt werden, den Prozessor veranlassen, das Verfahren gemäß einem der Ansprüche 1-7 auszuführen.

## Revendications

1. Méthode (400) comprenant :
la synchronisation (410) d'une pluralité d'unités d'interface distantes, RIU, (114A, 114B, 114C, 114D) sur un temps de réseau unique, la pluralité de RIU (114A, 114B, 114C, 114D) étant connectées au sein d'un réseau (102) ;
la réception (420), par une première (114A) parmi la pluralité de RIU (114A, 114B, 114C, 114D), d'un signal à une impulsion par seconde, 1PPS ; la méthode étant **caractérisée par** :
la détermination (430) d'un instant de réception du 1PPS et d'une période du 1PPS à partir du signal du 1PPS et par rapport au temps de réseau unique, l'instant de réception du 1PPS étant le moment où le signal du 1PPS est reçu par la première (114A) de la pluralité de RIU (114A, 114B, 114C, 114D) ; et
la transmission (440), par la première (114A) de la pluralité de RIU (114A, 114B, 114C, 114D), d'un message à une première autre (114B, 114C, 114D) de la pluralité de RIU (114A, 114B, 114C, 114D), le message comprenant l'instant de réception du 1PPS et la période du 1PPS, et la première autre (114B, 114C, 114D) de la pluralité de RIU (114A, 114B, 114C, 114D) étant l'une de la pluralité de RIU (114A, 114B, 114C, 114D) autre que la première (114A) de la pluralité de RIU (114A, 114B, 114C, 114D).

2. Méthode (400) selon la revendication 1, comprenant en outre :
la réception (510), par la première autre (114B, 114C, 114D) de la pluralité de RIU (114A, 114B, 114C, 114D), du message ;
l'extraction (520), par la première autre (114B, 114C, 114D) de la pluralité de RIU (114A, 114B, 114C, 114D), de l'instant de réception du 1PPS et de la période du 1PPS à partir du message ; et
la génération (530), par la première autre (114B, 114C, 114D) de la pluralité de RIU (114A, 114B, 114C, 114D), d'une horloge du 1PPS basée au moins sur l'instant de réception du 1PPS, la période du 1PPS et le temps de réseau unique.

3. Méthode (400) selon l'une quelconque des revendications précédentes, dans laquelle le signal du 1PPS provient d'au moins l'un des éléments suivants :
un système de positionnement global, GPS ;
dispositif de Positionnement, de Navigation et de Synchronisation Assurés, A-PNT ;
réseau sensible au temps, TSN, Unité de Navigation Native Remplaçable en Ligne, LRU;
une balise radio ;
un étalon de fréquence ;
un oscillateur de précision ; ou
une horloge atomique.

4. Méthode (400) selon l'une quelconque des revendications précédentes, dans laquelle le temps de réseau unique est basé sur au moins l'un des éléments suivants :
protocole de synchronisation de précision, PTP ; ou
protocole de synchronisation de précision générique, gPTP.

5. Méthode (400) selon l'une quelconque des revendications précédentes, dans laquelle le message est un message de Réseau Sensible au Temps, TSN.

6. Méthode (400) selon l'une quelconque des revendications précédentes, comprenant en outre :
la réception, par la première (114A) de la pluralité de RIU (114A, 114B, 114C, 114D), d'une référence de fréquence de 10 MHz ; et
la détermination de l'instant de réception du 1PPS et de la période du 1PPS à partir du signal du 1PPS et de la référence de fréquence de 10 MHz, par rapport au temps de réseau unique.

7. Méthode (400) selon l'une quelconque des revendications précédentes, comprenant en outre :
la réception, par une deuxième (214E) de la pluralité de RIU (214A, 214B, 214C, 214D, 214E), d'un deuxième signal du 1PPS, la deuxième (214E) de la pluralité de RIU (214A, 214B, 214C, 214D, 214E) étant l'une de la pluralité de RIU (214A, 214B, 214C, 214D, 214E) autre que la première (214A) de la pluralité de RIU (214A, 214B, 214C, 214D, 214E) ;
la détermination d'un deuxième instant de réception du 1PPS et d'une deuxième période du 1PPS à partir du deuxième signal du 1PPS et par rapport au temps de réseau unique, le deuxième instant de réception du 1PPS étant le moment où le deuxième signal du 1PPS est reçu par la deuxième (214E) de la pluralité de RIU (214A, 214B, 214C, 214D, 214E) ; et
la transmission, par la deuxième (214E) de la pluralité de RIU (214A, 214B, 214C, 214D, 214E) et en réponse à l'incapacité de la première (214A) de la pluralité de RIU (214A, 214B, 214C, 214D, 214E) à transmettre le message, d'un deuxième message à une deuxième autre (214A, 214B, 214C, 214D) de la pluralité de RIU (214A, 214B, 214C, 214D, 214E) à la place du message, le deuxième message comprenant le deuxième instant de réception du 1PPS et la deuxième période du 1PPS, et la deuxième autre (214A, 214B, 214C, 214D) de la pluralité de RIU (214A, 214B, 214C, 214D, 214E) étant l'une de la pluralité de RIU autre que la deuxième (214E) de la pluralité de RIU (214A, 214B, 214C, 214D, 214E).

8. Système (100) comprenant :
un processeur (310) ; et
une mémoire (320) stockant des instructions lisibles par machine qui, lorsqu'elles sont exécutées par le processeur (310), amènent le processeur (310) à :
la synchronisation d'une pluralité d'unités d'interface distantes, RIU, (114A, 114B, 114C, 114D) sur un temps de réseau unique, la pluralité de RIU (114A, 114B, 114C, 114D) étant connectées au sein d'un réseau (102) ;
la réception, par une première (114A) parmi la pluralité de RIU (114A, 114B, 114C, 114D), d'un signal à une impulsion par seconde, 1PPS ;
la détermination d'un instant de réception du 1PPS et d'une période du 1PPS à partir du signal du 1PPS et par rapport au temps de réseau unique, l'instant de réception du 1PPS étant le moment où le signal du 1PPS est reçu par la première (114A) de la pluralité de RIU (114A, 114B, 114C, 114D) ; et
la transmission, par la première (114A) de la pluralité de RIU (114A, 114B, 114C, 114D), d'un message à une première autre (114B, 114C, 114D) de la pluralité de RIU (114A, 114B, 114C, 114D), le message comprenant l'instant de réception du 1PPS et la période du 1PPS, et la première autre (114B, 114C, 114D) de la pluralité de RIU (114A, 114B, 114C, 114D) étant l'une de la pluralité de RIU (114A, 114B, 114C, 114D) autre que la première (114A) de la pluralité de RIU (114A, 114B, 114C, 114D).

9. Système (100) selon la revendication 8, dans lequel les instructions lisibles par machine comprennent en outre des instructions qui, lorsqu'elles sont exécutées par le processeur (310), amènent le processeur (310) à :
la réception, par la première autre (114B, 114C, 114D) de la pluralité de RIU (114A, 114B, 114C, 114D), du message ;
l'extraction, par la première autre (114B, 114C, 114D) de la pluralité de RIU (114A, 114B, 114C, 114D), de l'instant de réception du 1PPS et de la période du 1PPS à partir du message ; et
la génération, par la première autre (114B, 114C, 114D) de la pluralité de RIU (114A, 114B, 114C, 114D), d'une horloge du 1PPS basée au moins sur l'instant de réception du 1PPS, la période du 1PPS et le temps de réseau unique.

10. Système (100) selon la revendication 8 ou 9, dans lequel le signal du 1PPS provient d'au moins l'un des éléments suivants :
un système de positionnement global, GPS ;
dispositif de Positionnement, de Navigation et de Synchronisation Assurés, A-PNT ;
réseau sensible au temps, TSN, Unité de Navigation Native Remplaçable en Ligne, LRU;
une balise radio ;
un étalon de fréquence ;
un oscillateur de précision ; ou
une horloge atomique.

11. Système (100) selon l'une quelconque des revendications 8 à 10, dans lequel le temps de réseau unique est basé sur au moins l'un des éléments suivants :
protocole de synchronisation de précision, PTP ; ou
protocole de synchronisation de précision générique, gPTP.

12. Système (100) selon l'une quelconque des revendications 8 à 11, dans lequel le message est un message de Réseau Sensible au Temps, TSN.

13. Système (100) selon l'une quelconque des revendications 8 à 12, dans lequel les instructions lisibles par machine comprennent en outre des instructions qui, lorsqu'elles sont exécutées par le processeur (310), amènent le processeur (310) à :
la réception, par la première (114A) de la pluralité de RIU (114A, 114B, 114C, 114D), d'une référence de fréquence de 10 MHz ; et
la détermination de l'instant de réception du 1PPS et de la période du 1PPS à partir du signal du 1PPS et de la référence de fréquence de 10 MHz, par rapport au temps de réseau unique.

14. Système (100) selon l'une quelconque des revendications 8 à 13, dans lequel les instructions lisibles par machine comprennent en outre des instructions qui, lorsqu'elles sont exécutées par le processeur (310), amènent le processeur (310) à :
la réception, par une deuxième (214E) de la pluralité de RIU (214A, 214B, 214C, 214D, 214E), d'un deuxième signal du 1PPS, la deuxième (214E) de la pluralité de RIU (214A, 214B, 214C, 214D, 214E) étant l'une de la pluralité de RIU (214A, 214B, 214C, 214D, 214E) autre que la première (214A) de la pluralité de RIU (214A, 214B, 214C, 214D, 214E) ;
la détermination d'un deuxième instant de réception du 1PPS et d'une deuxième période du 1PPS à partir du deuxième signal du 1PPS et par rapport au temps de réseau unique, le deuxième instant de réception du 1PPS étant le moment où le deuxième signal du 1PPS est reçu par la deuxième (214E) de la pluralité de RIU (214A, 214B, 214C, 214D, 214E) ; et
la transmission, par la deuxième (214E) de la pluralité de RIU (214A, 214B, 214C, 214D, 214E) et en réponse à l'incapacité de la première (214A) de la pluralité de RIU (214A, 214B, 214C, 214D, 214E) à transmettre le message, d'un deuxième message à une deuxième autre (214A, 214B, 214C, 214D) de la pluralité de RIU (214A, 214B, 214C, 214D, 214E) à la place du message, le deuxième message comprenant le deuxième instant de réception du 1PPS et la deuxième période du 1PPS, et la deuxième autre (214A, 214B, 214C, 214D) de la pluralité de RIU (214A, 214B, 214C, 214D, 214E) étant l'une de la pluralité de RIU (214A, 214B, 214C, 214D, 214E) autre que la deuxième (214E) de la pluralité de RIU (214A, 214B, 214C, 214D, 214E).

15. Support non transitoire lisible par ordinateur, comprenant des instructions qui, lorsqu'elles sont exécutées par un processeur, amènent le processeur à exécuter la méthode selon l'une quelconque des revendications 1-7.
